(19) Europäisches Patentamt
European Patent Office
Office européen des brevets

(11) **EP 2 855 154 B1**

(12) **EUROPÄISCHE PATENTSCHRIFT**

(45) Veröffentlichungstag und Bekanntmachung des Hinweises auf die Patenterteilung:
**08.12.2021   Patentblatt 2021/49**

(51) Int Cl.:
*B41F 33/00* (2006.01)      *G03G 15/00* (2006.01)

(21) Anmeldenummer: **13732353.1**

(22) Anmeldetag: **29.05.2013**

(86) Internationale Anmeldenummer:
**PCT/EP2013/001591**

(87) Internationale Veröffentlichungsnummer:
**WO 2013/178360 (05.12.2013 Gazette 2013/49)**

(54) **VERFAHREN ZUM STEUERN EINES FARBDRUCKERS ODER FARBKOPIERERS**

METHOD FOR CONTROLLING A COLOR PRINTER OR A COLOR COPIER

PROCÉDÉ DE COMMANDE D'UNE IMPRIMANTE COULEUR OU D'UN COPIEUR COULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2012   DE 102012104584**

(43) Veröffentlichungstag der Anmeldung:
**08.04.2015   Patentblatt 2015/15**

(73) Patentinhaber: **Canon Production Printing Germany GmbH & Co. KG**
**85586 Poing (DE)**

(72) Erfinder: **PAUL, Andreas**
**85591 Vaterstetten (DE)**

(74) Vertreter: **Schaumburg und Partner Patentanwälte mbB**
**Postfach 86 07 48**
**81634 München (DE)**

(56) Entgegenhaltungen:
EP-A1- 0 083 086     EP-A2- 2 127 877
DE-A1- 4 335 350     DE-A1- 10 204 681
DE-A1- 19 738 992     DE-A1-102006 036 587
DE-A1-102007 041 393     US-A1- 2003 210 412

## Beschreibung

Die Erfindung betrifft ein Verfahren zum Steuern eines Farbdruckers oder eines Farbkopierers, bei dem mit Hilfe einer Druckeinheit zumindest ein Farbauszug einer ersten Farbe und ein Farbauszug einer zweiten Farbe zum Erzeugen eines Druckbildes auf einem zu bedruckenden Bedruckstoff aufgebracht werden und bei dem mit Hilfe eines durch die Druckeinheit des Farbdruckers bzw. Farbkopierers aufgedruckten Kontrollfeldes ein Steuersignal einer Steuerung zur Reduktion des Passerfehlers zwischen dem Farbauszug der ersten Farbe und dem Farbauszug der zweiten Farbe festgelegt wird.

Beim mehrfarbigen Druck werden zur Erzeugung des Farbbildes mehrere Farbauszüge auf dem Bedruckstoff übereinander gedruckt. Insbesondere werden vier Farbauszüge, nämlich Cyan, Gelb, Magenta und Schwarz, übereinander gedruckt. Um ein Druckbild einer hohen Qualität zu erhalten, ist es notwendig, dass die einzelnen Farbauszüge genau wie beabsichtigt übereinander gedruckt werden, da es ansonsten zu Farbabweichungen und/oder Unschärfen kommen kann. Die Abweichungen, mit der einzelne Farbauszüge relativ zueinander aufgedruckt werden, werden als Passerfehler oder auch als Registerfehler bezeichnet.

Ein bekanntes Verfahren zum Reduzieren von Passerfehlern ist es, dass in einem Randbereich des Bedruckstoffes Kontrollmarken der verschiedenen Farben der Farbauszüge aufgedruckt werden und visuell ermittelt wird, ob ein Passerfehler vorliegt und wie groß dieser ist. Entsprechend wird die Ansteuerung der Druckeinheit angepasst. Problematisch an diesem Verfahren ist, dass durch die manuelle Ermittlung des Passerfehlers diese nur recht ungenau erfolgen kann und ein hoher Aufwand hierzu notwendig ist.

Bei einem alternativen Verfahren werden die aufgedruckten Kontrollmarken mit Hilfe eines optischen, hochauflösenden Sensors erfasst und der Passerfehler hieraus automatisch ermittelt. Auch in diesem Fall wird daraufhin die Ansteuerung der Druckeinheit derart angepasst, dass der Passerfehler reduziert wird oder optimaler Weise überhaupt kein Passerfehler mehr vorliegt. Problematisch an diesem Verfahren ist es, dass hierzu teure hochauflösende optische Sensoren notwendig sind. Ferner werden diese speziellen Sensoren ausschließlich zur Ermittlung des Passerfehlers eingesetzt und müssen an verschiedenen Stellen über das Druckformat messen können.

Verfahren zum Ermitteln von Passerfehlern sind beispielsweise aus den Dokumenten DE 10 2009 035 006 A1, DE 102 44 437 B4, US 7,396,099 B2, DE 101 31 957 A1, DE 10 2010 036 249 A1, US 2010/0007690 A1, US 7,184,700 B2, DE 32 48 795 C2, EP 1 593 508 A2 und DE 197 38 992 A1 bekannt. Aus dem Dokument DE 196 39 014 C2 ist ein Verfahren zur Erfassung von optischen drucktechnischen Größen im Mehrfarbenauflagendruck bekannt.

Aus dem Dokument DE 43 35 350 A1 ist ein Verfahren zur Ermittlung von Passerabweichungen beim mehrfarbigen Druck bekannt, bei dem ein IST-Farbwert eines Messfeldes ermittelt und mit einem SOLL-Farbwert verglichen wird. Der SOLL-Farbwert wird mit Hilfe eines o.k.-Bogens oder mit Hilfe von Reprodaten ermittelt. Dies hat den Nachteil, dass der Soll-Farbwert nur sehr ungenau berechnet werden kann und somit die Passersteuerung ebenfalls nur sehr ungenau erfolgen kann.

Aus dem Dokument EP 0 083 068 A1 ist ein Verfahren zur Bestimmung der Passerabweichung beim Mehrfarbendruck bekannt, wobei für jede Farbe eine Registermarke aufgedruckt wird.

US 2003/0210412 A1 betrifft ein Verfahren zum Steuern eines Farbdruckers, bei dem Ausrichtfehler (Passerfehler oder Registerfehler) mindestens zweier übereinander gelagerter Farbauszüge korrigiert werden. Mit Hilfe eines Reflex-Sensors (reflection type photo sensor) werden Kontrollfelder vermessen, auf die Farbauszüge gedruckt sind. Der Druck erfolgt auf ein Transferband und auch das Vermessen der Kontrollfelder erfolgt auf diesem Transferband, welches ein Zwischenträger für das später auf den Bedruckstoff aufzubringende Druckbild ist und aus schwarzem, glänzenden Polyimid besteht. Daher wird als Referenzfeld für einen Vergleich mit einem farbigen Kontrollfeld schwarze Farbe verwendet, die sich im diffusen Reflexionsverhalten von der glänzenden Oberfläche des Transferbandes unterscheidet und so vom Reflex-Sensor ein Farbrand kontrastreich erfasst werden kann. Infolge eines Ausrichtfehlers ändert sich der Helligkeitswert am Farbrand des jeweiligen Kontrollfeldes, was sich im Ausgangssignal des Reflex-Sensors bemerkbar macht. Aus dieser Helligkeitsänderung kann auf den Ausrichtfehler geschlossen und ein Steuersignal zum Reduzieren der örtlichen Verschiebung der Farbauszüge generiert werden.

Es ist Aufgabe der Erfindung, ein Verfahren zum Steuern eines Farbdruckers oder Farbkopierers anzugeben, mit dessen Hilfe auf einfache Weise ein mehrfarbiges Druckbild mit möglichst geringen Passerfehlern erzeugbar ist.

Diese Aufgabe wird durch ein Verfahren mit den Merkmalen des Anspruchs 1 gelöst. Vorteilhafte Weiterbildungen der Erfindung sind in den abhängigen Ansprüchen angegeben.

Erfindungsgemäß wird mit Hilfe der Druckeinheit des Farbkopierers bzw. des Farbdruckers auf dem zu bedruckenden Bedruckstoff ein Kontrollfeld aufgedruckt, das ein vorbestimmtes Muster aufweist, welches zumindest die erste Farbe und die zweite Farbe umfasst. Mit Hilfe eines Farbwertsensors wird mindestens ein Farbwert des Kontrollfeldes ermittelt und anschließend eine Abweichung des ermittelten Farbwertes von einem Soll-Farbwert für das Kontrollfeld ermittelt. Das Muster des Kontrollfeldes ist derart ausgebildet, dass sich der Farbwert des Kontrollfeldes bei Änderung des Passerfehlers zwischen dem ersten Farbauszug und dem zweiten Farbauszug verändert.

Zur Bestimmung des Soll-Farbwertes wird mindestens ein Referenzfeld gedruckt, dessen Muster derart vorbestimmt ist, dass es unabhängig von dem Passerfehler immer den gleichen Farbwert aufweist. Der Farbwert des Referenzfeldes wird mit Hilfe des Farbwertsensors ermittelt und als Soll-Wert für den Vergleich mit dem Farbwert des Kontrollfeldes verwendet.

In Abhängigkeit dieser Abweichung zwischen dem über das Referenzfeld ermittelten Soll-Farbwert und dem Farbwert des Kontrollfeldes wird das Steuersignal der Steuerung zur Reduktion des Passerfehlers zwischen den Farbauszügen der ersten und der zweiten Farbe festgelegt. Hierdurch wird erreicht, dass ein passergenauer Druck durch die entsprechende Steuerung erreicht werden kann, ohne dass hierfür ein Sensor mit einer hohen optischen Auflösung notwendig ist. Der Passerfehler wird ausschließlich mit Hilfe des über das Kontrollfeld ermittelten Farbwertes und dessen Abweichung von dem Soll-Farbwert ermittelt, so dass kein zusätzlicher Sensor, wie bei bekannten Verfahren zur Steuerung des Passers, notwendig ist. Es muss also kein ortsauflösender Sensor verwendet werden, sondern nur ein farbauflösender Sensor. Ein Farbwertsensor ist bei den meisten Farbdruckern und Farbkopierern ohnehin vorhanden, um die Qualität des farbigen Druckes zu überwachen. Das Steuersignal wird im Folgenden auch als Steuergröße bezeichnet.

Durch das Ermitteln des Soll-Wertes über das Referenzfeld wird erreicht, dass keine theoretische Berechnung nötig ist, und somit eine besonders genaue Ermittlung des Soll-Farbwertes erfolgen kann.

Das Muster des Referenzfeldes wird insbesondere derart festgelegt, dass es die gleichen Farbanteile der ersten und der zweiten Farbe wie das Muster des Kontrollfeldes aufweist, so dass das Referenzfeld und das Kontrollfeld den gleichen Farbwert haben, sofern bei dem Kontrollfeld kein Passerfehler vorliegt. Der vorbestimmte Grenzwert ist derart gewählt, dass ein üblicherweise maximal auftretender Passerfehler geringer als dieser Grenzwert ist, so dass im regulären Betrieb abhängig von dem tatsächlichen Passerfehler zwischen den Farbauszügen der ersten und der zweiten Farbe das Referenzfeld immer den gleichen Farbwert hat und somit auch immer den gleichen Soll-Wert liefert.

Das Muster des Referenzfeldes ist insbesondere derart gewählt, dass die Anteile des Referenzfeldes, die ausschließlich mit der ersten Farbe bedruckt sind, die Anteile, die ausschließlich mit der zweiten Farbe bedruckt sind, und die Anteile, die unbedruckt, sind, gleich bleiben.

Alternativ kann das Muster des Referenzfeldes auch spiegelsymmetrisch zu einer Mittellinie des Referenzfeldes sein. Des Weiteren kann das Muster auch aus sich kreuzenden Segmenten ausgebildet sein. Die Winkelstellung ist vorzugsweise 90°. Dadurch ändert sich der Überdeckungsgrad beim Auftreten von Passerfehlern nicht. Alternativ lassen sich auch große Segmente drucken, bei denen sich Passerverschiebungen nur geringfügig auf den Überdeckungsgrad auswirken.

Eine weitere Möglichkeit ist es bei dem Referenzfeld eine vorbestimmte Rasterung der ersten Farbe und eine vorbestimmte Rasterung der zweiten Farbe übereinander zu drucken. Die Rasterpunkte der beiden Rasterungen überdecken sich teilweise, wobei durch die unterschiedliche Winkelung der Rasterungen die Anteile der Farbüberdeckungen leicht ermittelbar sind. Die Rasterungen werden derart gewählt, dass die sich ergebenden Anteile der Farbüberdeckungen beim Referenzfeld den entsprechenden Anteilen der Farbüberdeckungen beim Kontrollfeld entsprechen, wenn bei Drucken des Kontrollfelds kein Passerfehler vorliegt. Über die Rasterungen der erste Farbe und der zweiten Farbe sind die Flächendeckungsgrade FD1 und FD2 gegeben. Der Anteil der Fläche des Referenzfeldes, in dem beide Farben übereinander gedruckt sind, ergibt sich somit als FD1*FD2, der Anteil der Fläche, in dem nur die erste Farbe gedruckt ist, als FD1-FD1*FD2, und der Anteil der Fläche, in dem nur die zweite Farbe gedruckt ist, als FD2-FD1*FD2. Der Rest des Referenzfeldes ist unbedruckt.

Bei einer bevorzugten Ausführungsform können auch zwei Referenzfelder zur Bestimmung des Soll-Farbwertes benutzt werden, wobei ein erstes Referenzfeld eine vorbestimmte Rasterung der ersten Farbe und ein zweites Referenzfeld eine vorbestimmte Rasterung der zweiten Farbe aufweist. Insbesondere werden sowohl die erste als auch die zweite Farbe als Vollton aufgedruckt. Mit Hilfe des Farbwertsensors wird jeweils der Farbwert des ersten und des zweiten Referenzfeldes ermittelt, wobei der Soll-Farbwert in Abhängigkeit der ermittelten Farbwerte der Referenzfelder berechnet wird. Auf diese Weise wird erreicht, dass über die Referenzfelder das von den verwendeten Farben, dem Bedruckstoff und den Einstellungen des Druckers abhängige Reflektionsverhalten bei der theoretischen Berechnung des Soll-Farbwertes berücksichtigt wird, so dass der Soll-Farbwert mit einer hohen Genauigkeit berechnet werden kann. Insbesondere wird eine Vielzahl von Referenzfeldern mit unterschiedlichen Rasterungen der jeweiligen Farben verwendet, so dass eine besonders genaue Bestimmung des Soll-Farbwertes möglich ist.

Bei einer bevorzugten Ausführungsform wird in Abhängigkeit der Abweichung zwischen dem ermittelten Farbwert und dem Soll-Farbwert zunächst ein Passerfehler zwischen dem Farbauszug der ersten und der zweiten Farbe ermittelt. In Abhängigkeit des ermittelten Passerfehlers wiederum wird dann die Steuergröße der Steuerung zur Reduktion des Passerfehlers festgelegt, wobei diese Steuergröße derart festgelegt wird, dass der Passerfehler beseitigt oder zumindest reduziert wird.

Bei einer bevorzugten Ausführungsform wird für mindestens einen möglichen Wert des Passerfehlers ein Soll-Farbwert über ein entsprechendes Referenzfeld ermittelt, den das Kontrollfeld bei Vorliegen dieses möglichen Passerfehlers haben sollte. Anschließend wird die Abweichung des ermittelten tatsächlichen Farbwertes des Kontrollfeldes von diesem Soll-Farbwert ermittelt und es wird in Abhängigkeit der ermittelten Abweichung sowie der zuvor bereits ermittelten Abweichung zwischen dem ermittelten Farbwert des Kontrollfeldes und dem über das entsprechende Referenzfeld bestimmten Soll-Farbwert ohne Passerfehler der tatsächliche Wert des Passerfehlers bestimmt. Bei einer besonders bevorzugten Ausführungsform wird für eine Vielzahl von möglichen Werten des Passerfehlers jeweils der Soll-Farbwert bei Vorliegen dieses Passerfehlers ermittelt und jeweils die Abweichung zum ermittelten Farbwert berechnet. In Abhängigkeit aller ermittelten Abweichungen wird der tatsächliche Wert des Passerfehlers bestimmt, in Abhängigkeit dessen wiederum die Steuergröße festgesetzt wird. Wenn mehrere Referenzfelder direkt hintereinander gedruckt werden ist davon auszugehen, dass sich der Passer nicht ändert.

Hierbei wird insbesondere ermittelt, bei welchem der Soll-Farbwerte die geringste Abweichung zu dem ermittelten Farbwert besteht, und der Passerfehler, der diesem Farbwert zugrunde liegt, wird als tatsächlicher Passerfehler angenommen. Alternativ kann mit Hilfe der errechneten Soll-Farbwerte auch eine Ausgleichskurve der Abweichungen ermittelt werden, wobei anschließend das Minimum dieser Ausgleichskurve ermittelt wird und der diesem Minimum zugrundeliegende Passerfehler als tatsächlicher Passerfehler verwendet wird.

Die tatsächlichen Werte des Passerfehlers sind insbesondere symmetrisch um einen Fehler von 0, also einem passergenauen Druck, angeordnet. Die jeweilige Ermittlung des Soll-Farbwertes für die möglichen Passerfehler kann mit den gleichen Methoden, wie zuvor für den Soll-Farbwert, den dieser ohne Vorliegen eines Passerfehlers haben sollte, beschrieben, erfolgen.

Das Muster des Kontrollfeldes ist insbesondere nicht spiegelsymmetrisch ausgebildet, damit zumindest in eine voreingestellte Richtung die Richtung des Passerfehlers über die Änderung des Farbwertes ermittelt werden kann.

Das Muster des Kontrollfeldes weist vorzugsweise im Wechsel jeweils einen Streifen der ersten Farbe, einen Streifen der zweiten Farbe und einen unbedruckten Streifen auf. Bei Verwendung von weißem Papier als Bedruckstoff wechseln sich somit Streifen der ersten Farbe, Streifen der zweiten Farbe und weiße Streifen ab. Wenn ein Passerfehler zwischen dem Farbauszug der ersten Farbe und dem Farbauszug der zweiten Farbe auftritt, so kommt es, je nach dem, in welche Richtung der Passerfehler auftritt, dazu, dass sich zumindest ein Teil der Streifen der beiden Farben überdecken, was dazu führt, dass das Kontrollfeld einen anderen Farbeindruck hervorruft, was sich in dem anderen gemessenen Farbwert ausdrückt. Liegt ein Passerfehler vor, bei dem die Streifen der zweiten Farbe in Richtung des weißen Streifens verschoben ist, so ändert sich zwar das Muster, aber nicht der Farbwert, der die Anteile der ausschließlich mit der ersten Farbe, die Anteile die ausschließlich mit der zweiten Farbe und die weißen Anteile des Kontrollfeldes unverändert bleiben.

Bei einer bevorzugten Ausführungsform kann das Druckbild auch aus mehr als zwei Farbauszügen unterschiedlicher Farben aufgebaut sein. Die Ermittlung des Passerfehlers bzw. der Steuergröße zur Reduktion des Passerfehlers der weiteren Farben kann auf die gleiche Weise wie zuvor für die erste und die zweite Farbe beschrieben erfolgen. Insbesondere können das Kontrollfeld, das Muster des Kontrollfeldes, der Aufbau des Referenzfeldes und die Anzahl der verwendeten Kontrollfelder und Referenzfelder auf die entsprechende Weise weitergebildet werden.

Weitere Merkmale und Vorteile der Erfindung ergeben sich aus der folgenden Beschreibung, die die Erfindung anhand von Ausführungsbeispielen in Zusammenhang mit den beigefügten Figuren näher erläutert.

Es zeigen:

Figur 1    eine schematische Darstellung eines Druckers;

Figur 2    eine Draufsicht auf einen zu bedruckenden Bedruckstoff;

Figur 3    ein Diagramm zur Ermittlung des Passerfehlers mit Hilfe einer ermittelten Farbwertabweichung gemäß einer ersten Ausführungsform;

Figur 4    ein Diagramm zur Ermittlung des Passerfehlers mit Hilfe einer ermittelten Farbwertabweichung gemäß einer zweiten Ausführungsform;

Figur 5    eine schematische Darstellung von Kontrollfeldern zur Ermittlung des Passerfehlers gemäß einer ersten Ausführungsform;

Figur 6    eine schematische Darstellung von Kontrollfeldern zur Ermittlung des Passerfehlers gemäß einer zweiten Ausführungsform;

Figur 7    eine schematische Darstellung von Kontrollfeldern zur Ermittlung des Passerfehlers gemäß einer dritten Ausführungsform;

Figur 8    eine schematische Darstellung von Kontrollfeldern zur Ermittlung des Passerfehlers gemäß einer vierten Ausführungsform;

Figur 9    eine schematische Darstellung von Kontrollfeldern zur Ermittlung des Passerfehlers gemäß einer fünften Ausführungsform;

Figur 10   eine schematische Darstellung eines Kontrollfeldes zur Ermittlung des Passerfehlers gemäß einer sechsten Ausführungsform;

Figur 11   eine schematische Darstellung eines Referenzfeldes zur Ermittlung des SollFarbwertes gemäß einer ersten Ausführungsform;

Figur 12   eine schematische Darstellung eines Referenzfeldes zur Ermittlung des SollFarbwertes gemäß einer zweiten Ausführungsform;

Figur 13   eine schematische Darstellung mehrerer Referenzfelder zur Ermittlung des SollFarbwertes gemäß einer dritten Ausführungsform;

Figur 14   eine schematische Darstellung eines Überwachungsfeldes; und

Figur 15   ein Diagramm einer Messreihe eines Referenzfeldes und eines Kontrollfeldes bei unterschiedlichen Passerfehlern.

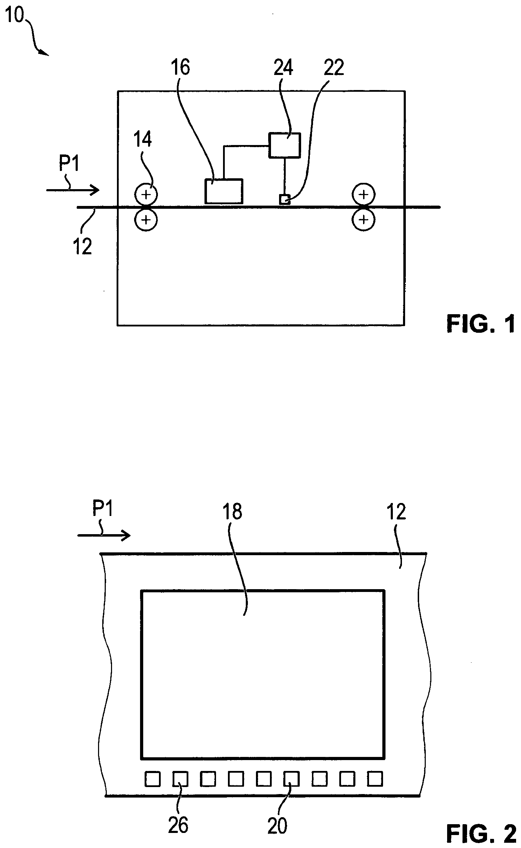

In Figur 1 ist eine schematische, stark vereinfachte Darstellung eines Vollfarbdruckers 10 zum Bedrucken eines Bedruckstoffs 12 dargestellt. Alternativ kann es sich auch um einen Farbkopierer handeln. Bei dem in Figur 1 gezeigten Ausführungsbeispiel handelt es sich bei dem Bedruckstoff 12 um eine in Richtung des Pfeiles P1 transportierte Papierbahn, die mit Hilfe des Farbdruckers 10 bedruckt wird. Alternativ können auch blattförmige oder bogenförmige Bedruckstoffe bedruckt werden.

Der Bedruckstoff 12 wird mit Hilfe von Transportelementen 14 an einer Druckeinheit 16 vorbeigeführt, mit deren Hilfe Tinte, Toner oder Druckfarbe zum Erzeugen eines mehrfarbigen Druckbildes auf dem Bedruckstoff 12 aufgebracht wird. Hierbei wird das mehrfarbige Druckbild insbesondere derart aufgebracht, dass mehrere Farbauszüge übereinander gedruckt werden. Dabei werden die Farben der Farbauszüge ortsabhängig vollflächig, gerastert oder nicht aufgetragen, so dass an verschiedenen Stellen die Farben nebeneinander oder in beliebiger Kombination übereinander gedruckt sind. Insbesondere werden vier Farbauszüge, nämlich ein erster Farbauszug in schwarz, ein zweiter Farbauszug in gelb, ein dritter Farbauszug in cyan und ein vierter Farbauszug in magenta gedruckt. In Figur 2 ist eine schematische Draufsicht auf den Bedruckstoff 12 dargestellt, wobei das mit Hilfe der Druckeinheit 16 erzeugte Druckbild mit dem Bezugszeichen 18 bezeichnet ist. Um ein Druckbild 18 einer hohen Qualität zu erreichen, ist es notwendig, dass die verschiedenfarbigen Farbauszüge passergenau übereinander gedruckt werden, d.h. dass sie eine vorbestimmte Soll-Ausrichtung relativ zueinander haben, damit sich die einzelnen Farbauszüge planmäßig überdecken und sich so die gewünschten Farben in den einzelnen Teilbereichen des Druckbildes 18 ergeben. Weicht die Position eines Farbauszuges relativ zur Position eines anderen Farbauszuges von der vorbestimmten relativen Ausrichtung zueinander ab, d.h. dass ein sogenannter Passerfehler vorliegt, so kann es sein, dass ein unscharfes Druckbild 18 mit Farbsäumen entsteht.

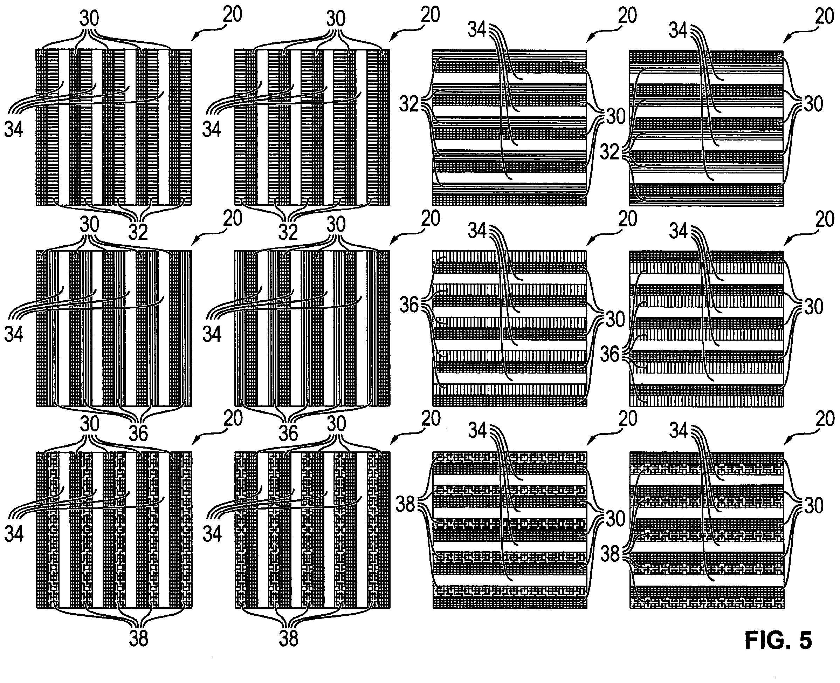

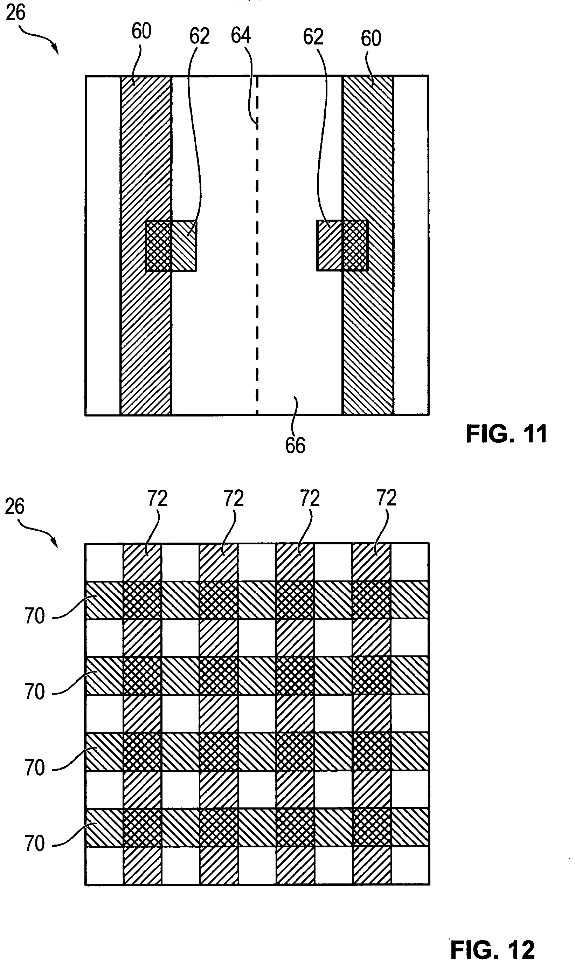

An mindestens einem Randbereich des Bedruckstoffs 12 werden von der Druckeinheit 16 zusammen mit dem Druckbild 18 mehrere Kontrollfelder aufgedruckt, von denen eines beispielhaft mit dem Bezugszeichen 20 bezeichnet ist. Die Kontrollfelder 20 dienen dazu, Einstellungen des Druckers 10 zu überprüfen. Mindestens eines der Kontrollfelder 20 wird erfindungsgemäß zur Ermittlung des Passerfehlers zwischen mindestens zwei Farbauszügen verwendet. Hierzu wird mit Hilfe der Druckeinheit 16 ein vorbestimmtes Muster des Kontrollfeldes 20, wie dieses im Zusammenhang mit den Figuren 5 bis 10 noch näher beschrieben wird, aufgedruckt. Mit Hilfe eines Farbwertsensors 22 wird der Farbwert des Kontrollfeldes 20 integral über das gesamte Kontrollfeld ermittelt und mit einem Soll-Farbwert des jeweiligen Kontrollfeldes 20, den das Kontrollfeld 20 aufweisen müsste, wenn kein Passerfehler vorliegt, verglichen. Der Soll-Farbwert wird, wie später noch in Zusammenhang mit den Figuren 11 bis 15 beschrieben, mit Hilfe mindestens eines Referenzfeldes bestimmt, dessen Muster derart ausgebildet ist, dass der Farbwert des Referenzfeldes immer unabhängig von einem eventuell vorkommenden Passerfehler ist und somit als Soll-Farbwert dienen kann. In Abhängigkeit dieser ermittelten Abweichung legt eine Steuereinheit 24 mindestens eine Steuergröße einer Steuerung zur Reduktion des Passerfehlers zwischen mindestens zwei Farbauszügen fest. Hierbei erfolgt die Festlegung der Steuergröße direkt in Abhängigkeit der ermittelten Abweichung des Farbwertes von dem Soll-Farbwert, wodurch der Passerfehler ermittelt wird. In Abhängigkeit des ermittelten Passerfehlers wird dann die Steuergröße festgelegt. Hierbei wird die Steuergröße derart festgelegt, dass durch die entsprechende Steuerung der Passerfehler beseitigt oder zumindest reduziert wird.

Die Steuereinheit 24 steuert in Abhängigkeit der ermittelten Steuergröße die Druckeinheit 16 derart an, dass beim zukünftigen Erzeugen des Druckbildes 18 der Passerfehler zumindest reduziert wird, indem die Ausrichtung der Farbauszüge zueinander entsprechend geändert wird. Hierzu wird beispielsweise bei einem Tintenstrahldrucker der Zeitpunkt, an dem die Tinte aus den Düsen ausgestoßen wird, verändert. Alternativ kann das Druckbild quer zur Druckrichtung pixelweise verschoben werden indem die verwendeten Düsen entsprechend zugeordnet werden. Ebenso kann die Druckeinheit motorisch verschoben werden. Bei einem elektrographischen Drucker kann auch das latente Bild über den Zeichengenerator verschoben werden.

Das Kontrollfeld 20 umfasst insbesondere ein Muster, bei dem alle zum Erzeugen des Druckbildes 18 verwendeten Farben der Farbauszüge vorkommen und das derart ausgebildet ist, dass mit seiner Hilfe der Passerfehler aller verwendeten Farbauszüge relativ zueinander sowohl längs der Transportrichtung als auch quer zur Transportrichtung P1 ermittelt werden können. Bei einer alternativen Ausführungsform können auch mehrere Kontrollfelder 20 verwendet werden, mit deren Hilfe die Passerfehler der einzelnen Farbauszüge zueinander ermittelt werden. Die Muster sind derart ausgebildet, dass sich je nach Passerfehler durch unterschiedliche Überlappungen der Farben der Farbauszüge andere Farbwerte des Kontrollfeldes 20 bzw. der Kontrollfelder 20 ergeben, so dass über die Abweichung des ermittelten Farbwertes des Kontrollfeldes 20 bzw. der ermittelten Farbwerte der Kontrollfelder 20 zu dem Soll-Farbwert bzw. den Soll-Farbwerten der Passerfehler bzw. die Passerfehler ermittelt werden können.

Als Farbwertsensor wird insbesondere ein Dreibereichs-Farbmessgerät oder ein spektrales Farbmessgerät verwendet. Mit Hilfe des Farbwertsensors 22 wird in einem Farbraum der Farbwert des Kontrollfeldes 20 insbesondere als eine Koordinate des Lab-Farbraumes ermittelt. Hierbei kann die Ermittlung direkt als Koordinate im Lab-Farbraum erfolgen oder es kann auch zunächst ein Reflektionswert und/oder eine Koordinate in einem anderen Farbraum ermittelt werden, die dann in die Koordinate des Lab-Farbraumes umgewandelt wird. Somit wird als Farbwert insbesondere ein Helligkeitswert, ein Wert einer Rot-Grün-Achse oder ein Wert einer Gelb-Blau-Achse ermittelt. Bei einer alternativen Ausführungsform können auch andere Farbräume verwendet werden, in denen die Farbwerte ermittelt werden. Die Verwendung des Lab-Farbraumes hat den Vorteil, dass eine Abweichung von ΔE=1 zwischen zwei Farben bedeutet, dass diese beiden Farben so gerade noch von dem menschlichen Auge unterschieden werden können.

Alternativ können als Farbwertsensoren auch Farbdichtemessgeräte oder RGB-Sensoren verwendet werden.

Für die Berechnung des Soll-Farbwertes des Kontrollfeldes 20 können unterschiedliche Verfahren verwendet werden. Beispielsweise kann das Modell von Neugebauer verwendet werden, bei dem ausgehend von Volltönen der Farbwert der Farben in einem Rasterdruck ermittelt werden kann. Der visuell empfundene Farbeindruck hängt gemäß dem Modell von den spektralen Reflektionsfaktoren des unbedruckten oder des bedruckten Papieres und von dem Anteil der mit den verschiedenen Farben der Farbauszüge bedeckten Flächen am Kontrollfeld ab.

Gemäß Neugebauer kann die Reflektion der Fläche $R_R$ nach folgender Formel aus dem Flächendeckungsgrad F der Druckfarbenschicht berechnet werden:

$$R_R = (1-F) \cdot R_P + F \cdot R_V ,$$

wobei

$R_V$ der Reflexionsfaktor der voll gedeckten Fläche ist,
$R_R$ der Reflexionsfaktor der gerasterten Fläche und
$R_P$ der Reflexionsfaktor von Papier ist.

Für das Übereinanderdrucken mehrerer Farbschichten ergibt sich beim Vierfarbendruck mit den Farben C M K und Y, also Cyan, Magenta, Schwarz und Gelb, somit die Formel

$$
\begin{aligned}
R_R = \ & R_P * (F_P + R_C * F_C + R_M * F_M + R_Y * F_Y + R_K * F_K + \\
& R_{CM} * F_{CM} + R_{CY} * F_{CY} + R_{CK} * F_{CK} + R_{MY} * F_{MY}' + R_{MK} * F_{MK} + \\
& R_{YK} * F_{YK} + R_{CMY} * F_{CMY} + R_{CMK} * F_{CMK} + R_{CYK} * F_{CYK} + \\
& R_{MYK} * F_{MYK} + R_{CMYK} * F_{CMYK}),
\end{aligned}
$$

wobei R die Reflexionsfaktoren der jeweils im Index angegebenen gegebenenfalls übereinander gedruckten Schichten und F die dazugehörigen Flächendeckungsgrade sind.

Die Reflexionsfaktoren R der übereinander gedruckten Schichten lassen sich somit durch Multiplikation der Reflexionsfaktoren der einzelnen Schichten berechnen. Diese müssen durch Dividieren des Reflexionsfaktors des Volltons auf Papier durch den Reflexionsfaktors des unbedruckten Papieres errechnet werden, um von den Reflexionseigenschaften des Papieres unabhängige Werte zu erhalten. Diese ist vor allem deshalb notwendig, da die Reflexionseigenschaften des Papieres beim Übereinanderdruck sonst mehrfach berücksichtigt würden.

Die Reflexionsfaktoren der Volltöne werden insbesondere derart ermittelt, indem auf dem Bedruckstoff 12 zusätzlich zu dem Kontrollfeld 20 mehrere Referenzfelder 26 aufgedruckt werden, wobei für jede Druckfarbe mindestens ein Referenzfeld 26 aufgedruckt wird, das den Vollton dieser Farbe aufweist, d.h. dass vollständig mit der jeweiligen Farbe bedruckt ist. Mit Hilfe des Farbwertsensors wird dann von jedem der Referenzfelder 26 jeweils der Farbwert ermittelt, der dann also den Farbwert des jeweiligen Volltones liefert, mit dessen Hilfe über die vorstehende Formel nach Neugebauer der Soll-Farbwert für das Kontrollfeld 20 ermittelt werden kann, da bei dem vorbestimmten Muster des Kontrollfeldes 20 bekannt ist, welche Flächenanteile welcher Farbe dieses Muster idealerweise aufweisen würde, wenn kein Passerfehler vorliegt.

Die Referenzfelder 26 müssen nur einmal bei der Kalibrierung des Druckers 10 gedruckt und deren Farbwerte gemessen werden. In der Regel werden die Referenzfelder 26 jedoch ohnehin laufend während des Druckbetriebes zur Farbregulierung gedruckt. In diesem Fall kann es sinnvoll sein auch den Farbwert des Referenzfeldes 26 wiederholt im Druckbetrieb zu messen und den Soll-Farbwert entsprechend neu zu ermitteln, um eventuelle Schwankungen auszugleichen.

Durch die vorstehende Formel von Neugebauer erhält man eine Näherung für die Spektralkurven beliebiger Mischfarben, aus denen sich wiederum nach bestimmten Methoden, beispielsweise nach der Norm ISO13655, die Farbwerte der entsprechenden Mischfarben berechnen lassen.

Alternativ können auch andere Methoden als das Verfahren nach Neugebauer für die Berechnung der Farbwerte verwendet werden. Beispielsweise kann für die Berechnung des Flächendeckungsgrades die Murray-Davis Gleichung

$$F_{MD} = \frac{1 - 10^{-(D_R - D_P)}}{1 - 10^{-(D_V - D_P)}}$$

werden, wobei

$$D_V = -\log(R_V)$$

und

$$D_R = -\log(R_R)$$

ist.

Als weitere alternative Methode kann die Berechnung der Farbwerte derart erfolgen, wie dies in DE 197 01 967 C2 beschrieben ist.

Nachdem nach einer der eine zuvor genannten Methoden oder einer anderen Methode der Soll-Farbwert des Kontrollfeldes berechnet wurde, wird die Abweichung des ermittelten Farbwertes von dem Soll-Farbwert ΔE als euklidischer Abstand, also als

$$\Delta E = \sqrt{(L_{ERM} - L_{SOLL})^2 + (a_{ERM} - a_{SOLL})^2) + (b_{ERM} - b_{SOLL})^2}$$

ermittelt.

Es können verschiedene Optimierungsstufe (ΔEab, ΔE99, ΔE00) verwendet werden, wie diese aus der DIN 6174, der DIN 6176 bzw. der CIE 15-2004 bekannt sind. Für Farbdichtmessungen oder Messungen über RGB-Sensoren sind entsprechende Unterschiedsmaße zu verwenden.

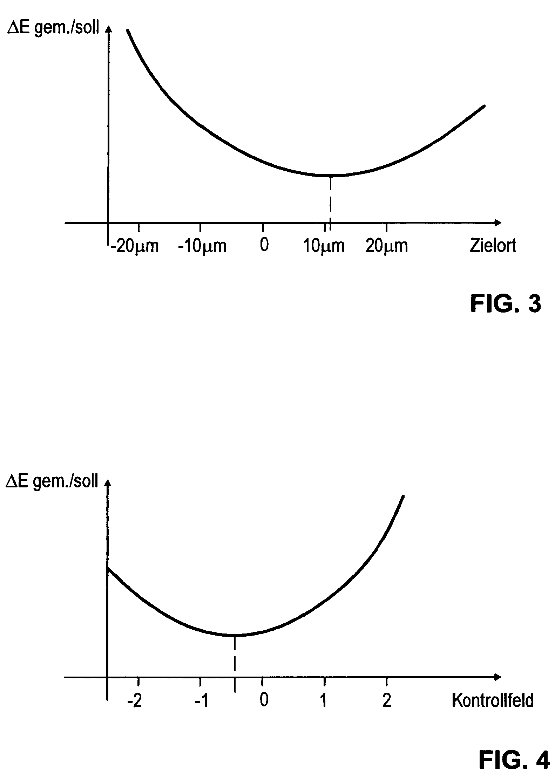

In Figur 3 ist ein Diagramm zur Ermittlung des Passerfehlers zwischen mindestens zwei Farbauszügen gemäß einer ersten Ausführungsform dargestellt. Gemäß dieser Ausführungsform werden ein Farbwert des Kontrollfeldes 20, ein Soll-Wert für den passergenauen Druck des Kontrollfeldes 20 mehrere Soll-Werte für vorbestimmte mögliche Passerfehler ermittelt. Die Soll-Werte werden hierbei insbesondere jeweils theoretisch errechnet.

In Figur 3 sind auf der X-Achse der jeweilige angenommene Passerfehler und auf der Y-Achse diejenige Abweichung eingetragen, die sich zwischen dem ermittelten Farbwert des Kontrollfeldes 20 und dem sich bei dem jeweiligen angenommenen Passerfehler ergebenden Soll-Farbwert ergibt, aufgetragen.

Wenn kein Passerfehler vorliegen würde, so müsste die sich auf diese Weise ergebende Kurve ihr Minimum an der Stelle Null, also beim passergenauen Druck aufweisen, da an dieser Stelle die Abweichung von dem ermittelten Farbwert von dem Soll-Farbwert am geringsten sein müsste, idealerweise den Wert Null aufweisen müsste. Der verbleibende Unterschied liegt an Farbschwankung, beispielsweise durch Einfärbungsvariationen oder Fixierungsvariationen.

Liegt dagegen ein Passerfehler zwischen den Farbauszügen des Druckbildes 18 vor, so ist, das Minimum der ermittelten Kurve nicht an der Stelle Null, sondern an derjenigen Stelle, bei der der angenommene Passerfehler zur Berechnung des entsprechenden Soll-Farbwertes dem Wert des nun tatsächlich aufgetretenen Passerfehlers entspricht.

Gemäß dem Ausführungsbeispiel nach Figur 3 wird somit anhand einer Vielzahl von ermittelten Soll-Farbwerten und der jeweiligen Abweichung des mit Hilfe des Farbmessgerätes 22 ermittelten Farbwertes von diesen theoretischen Soll-Farbwerten zunächst eine Kurve, insbesondere durch Interpolation, ermittelt. Anschließend wird das Minimum dieser Kurve ermittelt und hieraus wiederum der Passerfehler bestimmt.

In Figur 4 ist ein Diagramm zur Ermittlung des Passerfehlers gemäß einer zweiten Ausführungsform dargestellt. Bei dieser zweiten Ausführungsform wird nur ein Soll-Wert für das Kontrollfeld 20 ermittelt, nämlich der Soll-Farbwert, den das Kontrollfeld 20 beim passergenauen Druck haben würde. Bei einem zweiten Ausführungsbeispiel werden mehrere Kontrollfelder 20 auf den Bedruckstoff 12 aufgedruckt, wobei die Kontrollfelder 20 jeweils dasselbe Muster aufweisen, wobei die Farbenauszüge beim Erzeugen dieses Musters in den einzelnen Kontrollfeldern 20 jeweils um unterschiedliche vorbestimmte Werte zueinander versetzt gedruckt werden. Mit Hilfe des Farbwertsensors 22 wird von jedem der Kontrollfelder 20 jeweils der Farbwert ermittelt. Anschließend wird die Abweichung dieses ermittelten Farbwertes von dem Soll-Farbwert errechnet und, wie in Figur 4 dargestellt, über der jeweiligen vorbestimmten Abweichung der Farbauszüge bei dem jeweiligen Kontrollfeld 20 aufgetragen.

Aus den sich so ergebenden Werten wird mit Hilfe eines Ausgleichsverfahrens eine Ausgleichsfunktion gelegt. Insbesondere wird ein Interpolationsverfahren verwendet.

Die sich so ergebende Kurve hat für den Fall, dass kein Passerfehler vorliegt, also beim passergenauen Druck, ihr Minimum an der Stelle Null, d.h. dass die Abweichung des Farbwertes desjenigen Kontrollfeldes 20, bei dem die Farbauszüge ohne Versatz zueinander gedruckt werden, von dem errechneten Soll-Farbwert am geringsten wären. Liegt dagegen, wie bei dem Ausführungsbeispiel nach Figur 4, ein Passerfehler vor, so führt dies dazu, dass die vorbestimmte Abweichung der Farbauszüge bei den einzelnen Kontrollfeldern 20 entsprechend des vorliegenden Passerfehlers verändert wird und idealerweise bei einem der Kontrollfelder 20 die vorbestimmte Abweichung durch den Passerfehler genau ausgeglichen wird, so dass bei diesem Kontrollfeld 20 das Muster genau diejenige Farbverteilung aufweist, die dem errechneten Soll-Farbwert zugrunde liegt. Über die Bestimmung des Minimums der Kurve in Figur 4 kann der Passerfehler ermittelt werden, indem die Abweichung des Feldes des Minimums mit (-1) multipliziert wird.

Bei einer weiteren alternativen Ausführungsform können auch zwei Kontrollfelder 20 aufgedruckt werden, durch die Muster der beiden Kontrollfelder 20 relativ zueinander spiegelsymmetrisch sind. Von beiden der Kontrollfelder 20 wird jeweils der Farbwert ermittelt. Die Ermittlung des Passerfehlers kann dann derart erfolgen, dass die Abweichung der beiden ermittelten Farbwerte der spiegelsymmetrischen Kontrollfelder minimiert wird. Beim passergenauen Druck müssen beide Kontrollfelder 20 den gleichen Farbwert aufweisen. Wird nun schrittweise bei Vorliegen einer Farbwertabweichung zwischen den spiegelsymmetrischen Kontrollfeldern 20 die Steuerung zum Drucken mit den unterschiedlichen Farbauszügen geändert und jeweils zwei neue spiegelsymmetrische Kontrollfelder 20 aufgedruckt, so kann auf diese Weise der Druck so lange optimiert werden, bis kein Passerfehler mehr vorliegt. Die Richtung der Steuerung ergibt sich insbesondere durch den Vergleich mit dem jeweiligen Soll-Farbwert.

Ferner ist es alternativ möglich, dass vor dem Bedrucken des Bedruckstoffs 12 mit dem Druckbild 18 ein Testbild aufgedruckt wird, das eine Vielzahl von Referenzfeldern aufweist, wobei die Referenzfelder jeweils unterschiedliche Rasterungen der unterschiedlich verwendeten Farben aufweisen. Von jedem der so ermittelten Referenzfelder wird mit Hilfe des Farbwert-Sensors 22 der Soll-Farbwert festgestellt, so dass sich insgesamt ein Profil ergibt, welches jeweils den unterschiedlichen Rasterungen der verwendeten Farben die Farbwerte zuordnet. Mit Hilfe der vorbestimmten Farbverteilungen des vorbestimmten Musters des Kontrollfeldes 20 und den über den Farbwertsensor 22 ermittelten Farbwert des Kontrollfeldes 20 kann somit der Passerfehler errechnet werden. Beim Bedrucken des Bedruckstoffs 12 mit dem Testbild werden insbesondere die gleichen Druckereinstellungen des Druckers 10 wie später bei dem Bedrucken mit dem Druckbild 18 verwendet.

Bei einer weiteren alternativen Ausführungsform kann der Soll-Farbwert des Kontrollfeldes 20 auch nicht aus mehreren Referenzfeldern 26 errechnet, sondern über ein einziges Referenzfeld 26 mit Hilfe des Farbwert-Sensors 22 ermittelt werden. Hierzu weist dieses zusätzlich aufgebrachte Referenzfeld 26 ein Muster auf, das derart ausgebildet ist, dass es bis zu einem vorbestimmten Grenzwert des Passerfehlers unabhängig von dem vorliegenden Passerfehler immer den gleichen Farbwert, nämlich den Soll-Farbwert, liefert. Hierzu weist das zusätzlich aufgebrachte Referenzfeld 26 insbesondere die gleichen Flächenanteile der jeweiligen Farben wie das Muster des Kontrollfeldes 20 auf, wobei im Unterschied zum Muster des Kontrollfeldes 20 jedoch die Farben, sofern der tatsächlich vorliegende Passerfehler den voreingestellten Grenzwert nicht überschreitet, so weit voneinander entfernt aufgetragen sind, dass sich die einzelnen Farben zwar überlagern können, aber die Anteile der einzelnen Farben und der überlagerten Farben in dem Referenzfeld 26 trotz Verschiebungen aufgrund eines Passerfehlers immer konstant bleiben. Somit ergibt sich auch unabhängig von dem vorliegenden Passerfehler der gleiche Farbwert.

In Figur 11 ist ein solches passerunabhängiges Referenzfeld 26 gemäß einer ersten Ausführungsform gezeigt. Bei dieser ersten Ausführungsform sind die verschiedenfarbigen Segmente 60, 62 spiegelsymmetrisch zu einer Mittelachse 64 des Referenzfelds 26 angeordnet, so dass, unabhängig von dem vorliegenden Passerfehler, sich die verschiedenfarbigen Segmente 60, 62 über das gesamte Referenzfeld 26 betrachtet jeweils im gleichen Maße überlagern. Ferner bleiben auch die unbedruckten Teile 66 des Referenzfeldes 26 konstant, so dass der ermittelte integrale Farbwert des Referenzfeldes 26 unabhängig vom tatsächlich vorliegenden Passerfehler ist. Das Referenzfeld 26 ist insbesondere derart ausgebildet, dass dieser sich ergebende Soll-Farbwert mit dem Farbwert des Kontrollfelds 20 übereinstimmt, wenn bei dem Kontrollfeld 20 kein Passerfehler vorliegt. Insbesondere werden hierzu die gleichen Farben für die Segmente 60, 62 des Referenzfeldes 26 wie für die Segmente des Kontrollfeldes 20 verwendet, wobei die jeweiligen Flächenanteile der einzelnen Farbsegmente und der Überlappungen bzw. der unbedruckten Bereiche im Referenzfeld 26 und dem passergenauen Kontrollfeld 20 gleich sind.

In Figur 12 ist ein Referenzfeld 26 gemäß einer zweiten Ausführungsform gezeigt, welches ebenfalls unabhängig vom auftretenden Passerfehler den gleichen Farbwert als Soll-Farbwert liefert. Hierzu weist das Referenzfeld 26 ein Muster auf, das aus sich kreuzenden, insbesondere orthogonal schneidenden, Segmenten 70, 72 unterschiedlicher Farben besteht. Auch bei diesem Muster ist es so, dass die Anteile der reinen Farben, die Anteile der Überdeckungen und der Anteile der uneingefärbten Bereiche konstant bleiben.

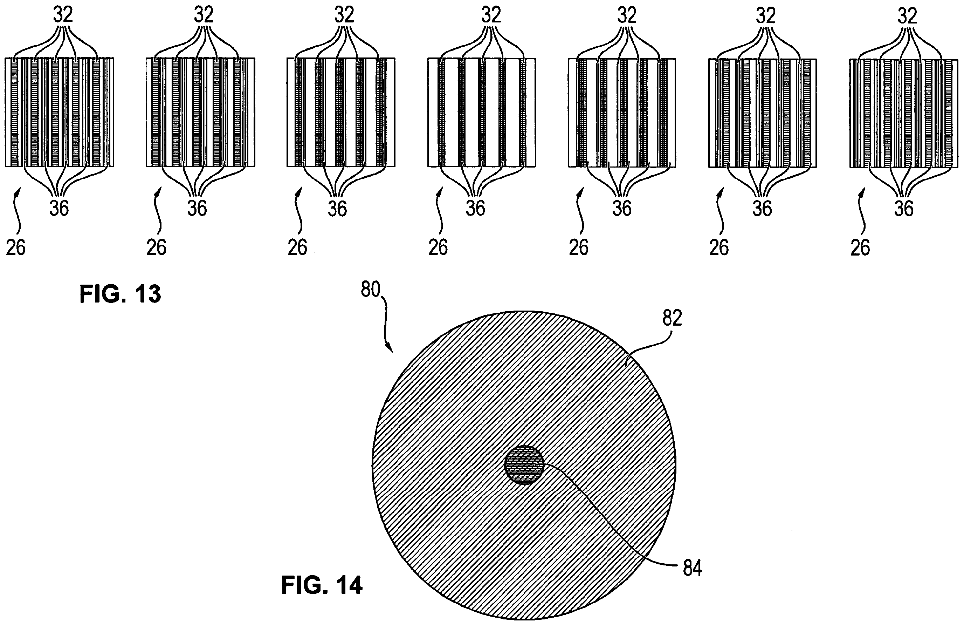

In Figur 13 ist eine schematische Darstellung mehrerer Referenzfelder 26 gemäß einer dritten Ausführungsform gezeigt. Hierbei wird zur Ermittlung des Soll-Farbwertes eine Vielzahl von Referenzfeldern 26 bedruckt, wobei die Referenzfelder 26 jeweils im Wechsel cyanfarbige Streifen 32, magentafarbige Streifen 36 und nicht bedruckte Streifen aufweisen, wobei die cyanfarbigen Streifen 62 und die mangentafarbigen Streifen 36 von Referenzfeld zu Referenzfeld 26 mit einem unterschiedlichen Versatz zueinander gedruckt werden und sich somit unterschiedlich weit überlappen. Es wird von jedem der Referenzfelder 26 der Farbwert mit Hilfe des Farbwertsensors 22 ermittelt. Unabhängig von dem tatsächlich vorliegenden Passerfehler kann nun, entweder als einer der Extremwerte der ermittelten Farbwerte oder über eine Mittelwertbildung aus den beiden ermittelten Extremwerten auf einfache Weise der Soll-Farbwert bestimmt werden. Unabhängig vom Passerfehler wird bei einem der Referenzfelder 26 eine vollständige Überlappung der Streifen 32, 36 und bei einem der Referenzfelder 26 ein vollständiges Nebeneinanderdrucken der Streifen 32, 36 erfolgen, so dass über diese Werte der Soll-Farbwert ermittelt werden kann.

Wenn mehrere Referenzfelder 26 direkt hintereinander gedruckt werden ist davon auszugehen, dass sich der Passerfehler hierbei nicht wesentlich ändert und dieser somit keinen Einfluss hat.

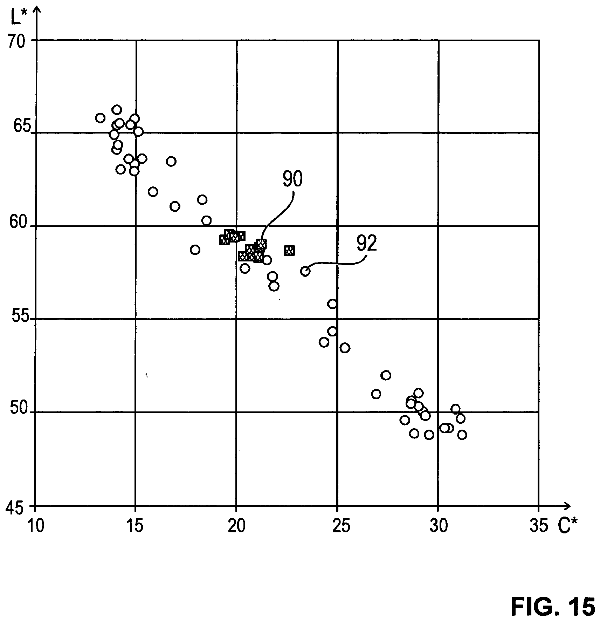

In Figur 15 ist ein Diagramm von experimentell ermittelten Farbwerten eines gekreuzten Referenzfeldes 26 aus Figur 12 und eines Kontrollfeldes 20 mit parallelen Streifen der gleichen Farben wie das Referenzfeld 26 bei unterschiedlichen Passerfehlern gezeigt. Hierbei sind auf der x-Achse die Buntheit C* und auf der y-Achse die Helligkeit L* aufgetragen. Die Messwerte des gekreuzten Referenzfeldes 26 sind hierbei durch die Quadrate 90, die Messwerte des gestreiften Kontrollfeldes 20 durch die Kreise 92 dargestellt.

Wie dem Diagramm gut zu entnehmen ist, weist das beim Experiment verwendete gekreuzte Referenzfeld 26 unabhängig von dem vorliegenden Passerfehler in etwa die gleiche Buntheit C* und die gleichen Helligkeit L* auf. Die Quadrate 90 liegen daher eng beieinander. Für das gestreifte Kontrollfeld 20, wie dieses beispielsweise in Figur 5 gezeigt ist, schwanken die ermittelten Messwerte deutlich zwischen zwei Extrema, wobei ein Extremum das vollständige Überlappen der verschiedenfarbigen Streifen und das andere Extremum das vollständige Nebeneinanderliegen der verschiedenfarbigen Streifen darstellt. Bei dem Beispiel ergibt sich zwischen diesen beiden Extrema eine Abweichung $\Delta E=25$. Bei dem gekreuzten Referenzfeld 20 liegt die Abweichung nur bei $\Delta E=1$. Somit können noch Passerfehler bis 500 $\mu m$ detektiert werden. Die Genauigkeit kann durch die Verwendung von kleineren Segmenten in den Referenzfeldern 20 bzw. Kontrollfeldern 26 noch weiter erhöht werden.

In Figur 5 ist eine schematische Darstellung von Kontrollfeldern 20 gemäß einer ersten Ausführungsform dargestellt. Bei dieser ersten Ausführungsform werden zur Ermittlung der Passerfehler aller vier verwendeten Grundfarben beim Vollfarbdruck relativ zueinander zwölf Kontrollfelder verwendet, wobei jeweils für Cyan, Magenta und Gelb der entsprechende Passerfehler relativ zu Schwarz ermittelt wird. Für jede Farbe sind hierbei vier Kontrollfelder 20 vorgesehen, wobei jeweils das Muster zweier der Kontrollfelder 20 spiegelsymmetrisch ist und die Muster der anderen beiden Kontrollfelder 20 relativ zu den ersten beiden Kontrollfeldern 20 um 90° gedreht angeordnet sind.

Die Kontrollfelder 20 umfassen jeweils im Wechsel schwarze Streifen 30, einen mit der jeweiligen Farbe bedruckten Streifen 32,36,38 und unbedruckte Streifen 34 auf, wobei die Streifen 30, 32, 34, 36, 38 insbesondere jeweils dieselbe Breite und dieselbe Länge aufweisen.

Die in Figur 5 gezeigten zwölf Kontrollfelder 20 zeigen jeweils die idealen Muster, wenn kein Passerfehler vorliegt. Im Folgenden wird bezogen auf das erste Kontrollfeld, d.h. das Kontrollfeld, das in Figur 5 oben links dargestellt ist, beschrieben, was beim Auftreten eines Passerfehlers passieren würde.

Tritt ein Passerfehler zwischen dem schwarzen und dem cyanfarbige Farbauszug derart auf, dass der cyanfarbige Farbauszug relativ zum schwarzen Farbauszug nach links versetzt aufgedruckt wird, so wandern die cyanfarbigen Streifen 32 in die schwarzen Streifen 30 hinein, so dass der Anteil der schwarz eingefärbten Fläche des Kontrollfeldes gleich bleibt, der Anteil der cyan eingefärbten Fläche sich verringert und der Anteil der unbedruckten Fläche, also der weißen Fläche, größer wird. Somit ergibt sich für das Kontrollfeld 20 über die gesamte Fläche integriert ein anderer Farbwert, wobei sich für unterschiedliche Passerfehler jeweils ein anderer Farbwert ergibt. Somit ist es möglich, über die ermittelte Abweichung des ermittelten Farbwertes dem Soll-Farbwert den Passerfehler zu ermitteln.

Tritt dagegen ein Passerfehler derart auf, dass der cyanfarbige Farbauszug relativ zum schwarzen Farbauszug nach rechts von der Soll-Position abweicht, so bleiben sowohl die Farbanteile der schwarz eingefärbten Fläche als auch der cyan eingefärbten Flächen als auch der unbedruckten Fläche bei dem ersten Kontrollfeld unverändert, sofern der Passerfehler nicht die Breite der Streifen 30 bis 34 überschreitet.

Somit kann mit Hilfe des ersten Kontrollfeldes lediglich ein Passerfehler in eine vorbestimmte Richtung, im gezeigten Ausführungsbeispiel nach links, ermittelt werden.

Durch die spiegelsymmetrische Anordnung des Musters in dem zweiten Kontrollfeld, also dem Kontrollfeld in der ersten Reihe, das zweite von links, wird erreicht, dass mit diesem Kontrollfeld ein Passerfehler in die der ersten Richtung entgegengesetzte zweite Richtung, also ein Passerfehler nach rechts ermittelt werden kann. Weder mit dem ersten noch mit dem zweiten Kontrollfeld kann ein Passerfehler, der orthogonal zur ersten bzw. orthogonal zur zweiten Richtung gerichtet ist, also ein Passerfehler in der Figur 5 nach oben oder unten ermittelt werden. Durch Drehen des Musters um 90° in dem dritten und vierten Kontrollfeld, als den beiden weiteren Kontrollfelder in der ersten Reihe, wird erreicht, dass der Passerfehler in jede beliebige Richtung in der Papierebene über die vier Kontrollfelder ermittelt werden kann.

Die anderen acht Kontrollfelder sind für die entsprechende Ermittlung der Passerfehler der anderen beiden Farben, also für Magenta und Gelb relativ zu Schwarz vorgesehen. Hierzu weisen auch diese weiteren acht Kontrollfelder jeweils das gleiche Muster entsprechend gespiegelt und gedreht auf.

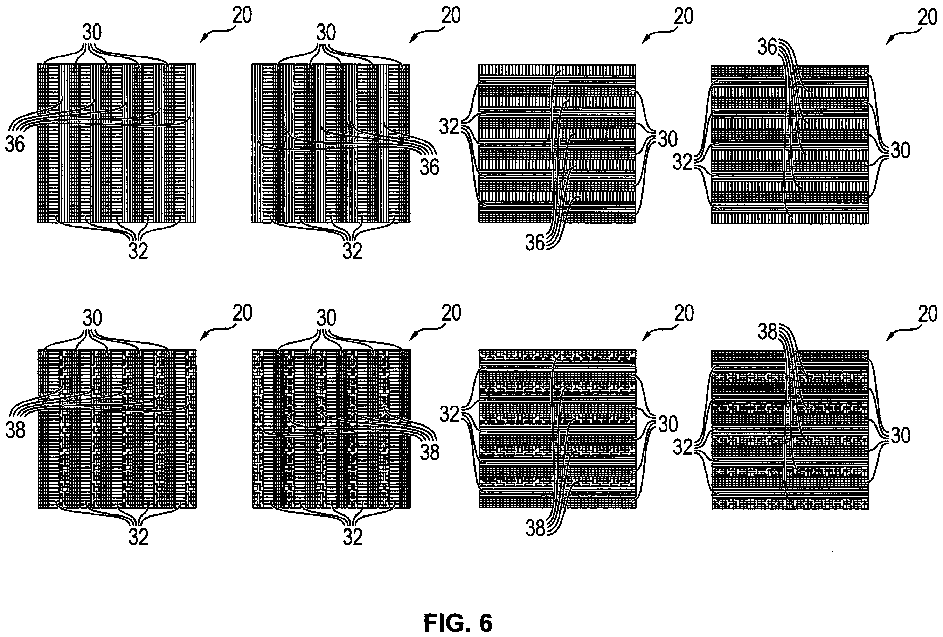

In Figur 6 ist eine schematische Darstellung der Kontrollfelder 20 gemäß der zweiten Ausführungsform der Erfindung gezeigt. Bei dieser Ausführungsform sind zu der Ermittlung der Passerfehler aller vier Farben relativ zueinander lediglich acht Kontrollfelder 20 notwendig. Hierzu werden die in der ersten Ausführungsform unbedruckten Streifen 34 auch jeweils mit einer weiteren Farbe bedruckt. Bei dem gewählten Ausführungsbeispiel in Figur 6 umfasst jedes Muster somit im Wechsel schwarze Streifen 30, cyan-farbige Streifen 32 und entweder magenta-farbige Streifen 36 oder gelbe Streifen 38. Je nach dem, in welche Richtung welcher Farbauszug einen Passerfehler aufweist, ergeben sich über die Überlappung der einzelnen Streifen 30, 32, 36, 38 unterschiedliche Farben und somit auch unterschiedliche resultierende Farbwerte der Kontrollfelder 20. Tritt beispielsweise bei dem Kontrollfeld oben links ein Passerfehler des cyan-farbige Farbauszuges nach links auf, so bleibt der Anteil der schwarz- und magenta-farbig erscheinenden Flächen gleich, wobei der Anteil der cyan-farbig erscheinenden Flächen abnimmt und der Anteil der unbedruckten Flächen zunimmt. Wird dagegen der cyan-farbige Farbauszug nach rechts verschoben, so bleiben die schwarz eingefärbten Flächen gleich, wohingegen der Anteil der cyan-farbigen Flächen und der magenta-farbigen Flächen abnimmt und der Anteil der unbedruckten Flächen und der blauen Flächen zunimmt.

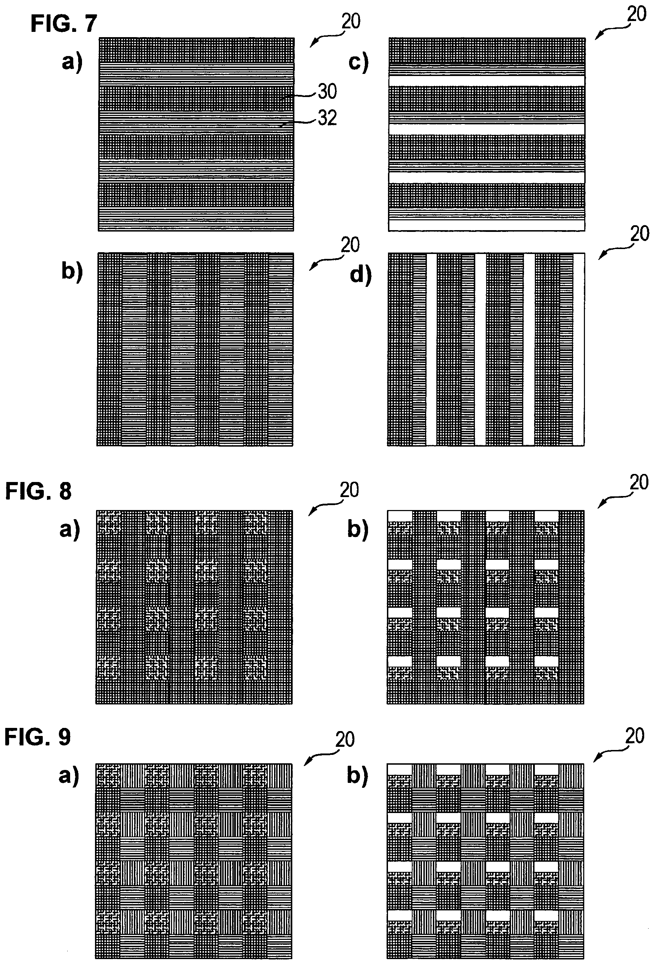

In Figur 7 ist eine schematische Darstellung von vier Kontrollfeldern 20 gemäß einer dritten Ausführungsform dargestellt, wobei bei dieser Ausführungsform lediglich der Passerfehler zwischen Schwarz und Cyan ermittelt wird. Die Figuren 7a und 7b zeigen hierbei zwei Kontrollfelder 20, wenn kein Passerfehler vorliegt. Die Kontrollfelder 20 weisen jeweils im Wechsel schwarze und cyan-farbige Streifen 30, 32 auf, wobei das Muster des Kontrollfeldes 20 nach Figur 7b relativ zum Muster des Kontrollfeldes 20 von Figur 7a um 90° gedreht ist. Figur 7c zeigt das sich ergebende Muster, wenn bei dem Kontrollfeld 20 nach Figur 7a der cyan-farbige Farbauszug nach oben verschoben ist. Entsprechend zeigt Figur 7d das Kontrollfeld 20 nach Figur 7b beim Vorliegen eines Passerfehlers, bei dem der cyan-farbige Farbauszug relativ zum schwarzen Farbauszug nach links verschoben ist. Die Größe des Passerfehlers entspricht in den Figuren 7c und 7d der Breite der weißen Felder.

In Figur 8 sind zwei Kontrollfelder 20 gemäß einer vierten Ausführungsform dargestellt, wobei Figur 8a das Kontrollfeld 20 bei einem passergenauen Druck und Figur 8b das Kontrollfeld 20 beim Vorliegen eines Passerfehlers zeigt.

Das Kontrollfeld 20 nach Figur 8a weist ein Muster auf, bei dem jeweils im Wechsel komplett schwarz eingefärbte Streifen und Streifen, die jeweils gelbe und schwarze Quadrate im Wechsel aufweisen, angeordnet sind. In Figur 8b ist das sich ergebende Muster gezeigt, das sich bei einem Passerfehler ergibt, bei dem der gelbe Farbauszug relativ zum schwarzen Farbauszug nach unten versetzt angeordnet ist. Durch diesen Passerfehler nimmt der gelbe Anteil ab, wohingegen der unbedruckte, also der weiße, Anteil zunimmt. Der schwarze Anteil bleibt unverändert. Entsprechend ergibt sich ein anderer Farbwert.

In Figur 9 sind zwei Kontrollfelder 20 gemäß einer fünften Ausführungsform dargestellt, wobei in Figur 9a jeweils wieder der passergenaue Druck und in Figur 9b das sich bei einem Passerfehler, bei dem der gelbe Farbauszug relativ zu den anderen drei Farbauszügen nach unten versetzt angeordnet ist, ergebende Muster gezeigt ist.

Das Kontrollfeld 20 nach Figur 9a weist ein schachbrettartiges Muster auf, wobei die jeweiligen Zeilen im Wechsel gelbe und magenta-farbige Quadrate bzw. schwarze und cyan-farbige Quadrate aufweisen. Die Verwendung eines solchen schachbrettartigen Musters hat den Vorteil, dass weniger Kontrollfelder zur Ermittlung aller Passerfehler aller Farbauszüge relativ zueinander notwendig sind, da je nach dem, in welche Richtung welcher Farbauszug relativ zu den Anderen verschoben wird sich unterschiedliche Farben durch die Überlagerungen der einzelnen Farbauszüge ergeben und somit sich ein unterschiedlicher Farbwert ergibt.

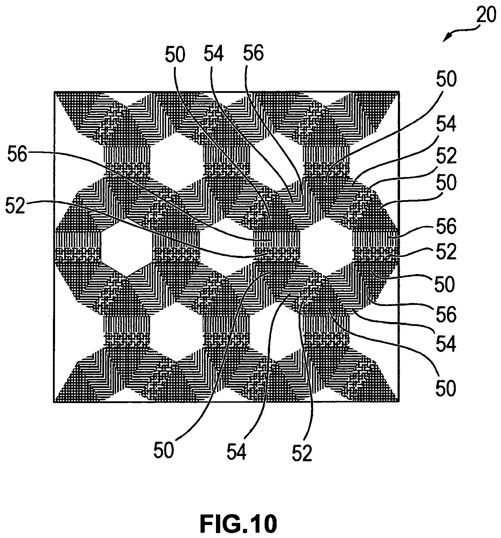

In Figur 10 ist eine schematische Darstellung eines Kontrollfeldes 20 gemäß einer sechsten Ausführungsform dargestellt, wobei bei dieser sechsten Ausführungsform des Kontrollfeldes 20 ein Muster aufweist, bei dem die vier verwendeten Druckfarben derart angeordnet sind, dass sich mit Hilfe dieses nur einen Kontrollfeldes 20 alle Passerfehler in alle Richtungen ermitteln lassen. Hierzu sind die Farben derart angeordnet, dass sich je nach dem, in welche Richtung welcher Farbauszug relativ zu welchem anderen Farbauszug versetzt angeordnet wird, ein anderer Farbwert des Kontrollfeldes 20 ergibt.

Das Muster nach Figur 10 weist eine Vielzahl von ringförmigen Zwölfecken auf, wobei jedes Zwölfeck wiederum sechs schwarz eingefärbte Dreiecke 50 aufweist, deren Spitzen auf den Mittelpunkt des Zwölfecks gerichtet sind. Die Dreiecke 50 sind insbesondere gleichseitige Dreiecke und weisen jeweils den gleichen Winkelabstand zueinander auf. Zwischen den schwarzen Dreiecken 50 sind jeweils zwei farbige Streifen 52 bis 56 angeordnet, wobei zwischen zwei benachbarten schwarzen Dreiecken 50 jeweils im Wechsel zum einen ein gelber Streifen 52 und ein cyan-farbiger Streifen 54 und ein gelber Streifen 52 und magenta-farbiger Streifen 54 sowie ein magenta-farbiger Streifen 56 und ein cyan-farbiger Streifen 54 angeordnet sind.

Darüber hinaus sind eine Vielzahl weiterer möglicher Muster für die Kontrollfelder 20 denkbar. Je nach verwendetem Muster variiert die Anzahl der notwendigen Kontrollfelder 20 um alle denkbaren Passerfehler ermitteln zu können.

Bei einer alternativen Ausführungsform können auch mehrere Kontrollfelder 20 verwendet werden, bei denen die Muster derart gewählt sind, dass sie jeweils die gleichen Farbanteile der verschiedenen Farben aufweisen, jedoch eine unterschiedliche Anzahl unterschiedlich breiter Streifen haben. Sofern Streifen mit einem großen Abstand zueinander, d.h., dass ein großer unbedruckter Raum zwischen ihnen ist, verwendet werden, ändert sich auch beim Auftreten eines geringeren Passerfehlers die Farbzusammensetzung des Kontrollfeldes 20 nicht, so dass der Farbwert unverändert bleibt. Bei Kontrollfeldern 20 mit verhältnismäßig kleinem Abstand tritt dagegen schon bei einem kleinen Passerfehler eine Überlagerung der Streifen auf, so dass sich der Farbwert des Kontrollfeldes 20 ändert. Entsprechend kann über die Farbwerte wiederum der vorliegende Passerfehler ermittelt werden.

Mit Hilfe der zuvor beschriebenen Verfahren können die Passerfehler, auch bei Vorliegen eines nur kleinen Passerfehlers, mit hoher Genauigkeit ausschließlich über die Farbwerte ermittelt werden. Dies hat den Vorteil, dass keine zusätzlichen Sensoren notwendig sind. Insbesondere sind keine Sensoren notwendig, die hoch ortsauflösende Bilder der Kontrollfelder 20 liefern, in denen dann die Abweichung gemessen wird. Die Farbwert-Sensoren 22 sind in der Regel ohnehin in Farbdruckern 10 bereits vorhanden. Ferner sind solche Farbwertsensoren 22 verglichen mit hochauflösenden Sensoren kostengünstig und benötigen nur einen geringen Bauraum. Insbesondere ist es nicht notwendig, mehrere Sensoren zum einen für die Farbmessung und zum anderen für die Passersteuerung zu verwenden. Somit ergibt sich insbesondere auch eine hohe Messgeschwindigkeit.

Ferner haben die Verfahren den Vorteil, dass die Kontrollfelder 20 kompatibel zu den ohnehin verwendeten Kontrollfeldern sind, da sie die gleiche Größe aufweisen und ebenfalls am Randbereich mit aufgedruckt werden können. Durch die Variierung der Größe der einzelnen Bereiche des Musters des Kontrollfeldes 20 kann eine Anpassung an jeden beliebigen Passerfehler erfolgen, so dass auf einfache Weise eine Skalierbarkeit möglich ist.

Ein Versuch der Anmelderin mit einem elektrofotografischen Drucker und den Farben Cyan und Magenta ergab eine Farbwertabweichung zwischen dem vollständigen Nebeneinanderdrucken der beiden Farben und dem vollständigen Übereinanderdrucken der beiden Farben von $\Delta E=27$. Der Farbunterschied ist so groß, dass auch eine Teilüberdeckung von z.B. 5 % sicher erkannt werden könnte. Somit kann abhängig von der Größe des Kontrollfeldes 20 ein Passerfehler von 5 % der Breite der unterschiedlich farbigen Streifen des Musters des Kontrollfeldes 20 ermittelt werden. Bei 0,5 mm Streifenbreite kann somit ein Passerfehler von 25 $\mu$m detektiert werden. Handelsübliche Farbmesssensoren 22 weisen typischerweise eine Wiederholgenauigkeit deutlich besser als 1 $\Delta E$ auf. Somit ist die messtechnische Genauigkeit ausreichend für eine Unterscheidung verschiedener Überdeckungsgrade.

Die Streifenbreite ist insbesondere derart gewählt, dass der maximal auftretende Passerfehler geringer als diese Streifenbreite ist. Sollte der maximal auftretende Passerfehler größer als die Streifenbreite sein, so kann der Passerfehler nicht genau ermittelt werden. In diesem Fall können Streifen mit einer größeren Breite verwendet werden.

Bei einer besonders bevorzugten Ausführungsform kann bei der Inbetriebnahme des Farbdruckers 10 zunächst ein Muster für das Kontrollfeld 20 mit breiten Streifen verwendet werden und die Streifenbreite im Betrieb zunehmend verkleinert werden. Ferner ist es möglich, die verwendeten Muster des Kontrollfeldes 20 oder die Anzahl der verwendeten Kontrollfelder 20 im Druckbetrieb in Abhängigkeit der auftretenden Passerfehler zu verändern. Insbesondere wird zunächst nur ein Kontrollfeld 20 mit allen verwendeten Farben benutzt und erst bei Auftreten von Passerfehlern bzw. des Überschreitens von voreingestellten Grenzwerten des Passerfehlers werden zusätzliche Kontrollfelder 20 aufgedruckt, mit deren Hilfe die Richtung des Passerfehlers bestimmt wird und/oder mit deren Hilfe eine genauere Bestimmung des Passerfehlers möglich ist.

Bei einer weiteren Ausführungsform können auch nur so lange Kontrollfelder 20 und Referenzfelder 26 aufgedruckt werden, bis kein Passerfehler mehr vorliegt bzw. dieser in tolerierbaren Grenzen ist. Zur Reduzierung des Aufwands und insbesondere zur Reduzierung der aufzubringenden Tinte, des Toners bzw. der aufzubringenden Druckfarbe werden dann zunächst anstelle von Kontrollfeldern 20 und Referenzfelder 26 lediglich einfach aufgebaute Überwachungsfelder 80 aufgedruckt. Ein solches Überwachungsfeld ist in Figur 14 dargestellt. Das Überwachungsfeld 80 umfasst einen großen Kreis 82 einer ersten Farbe und einen wesentlich kleineren Kreis 84 einer zweiten Farbe auf. Wenn kein Passerfehler zwischen den Farbauszügen dieser beiden Farben vorliegt, so fallen die Mittelpunkte der beiden Kreise 82, 84 zusammen. Bei Vorliegen eines Passerfehlers dagegen wandert der kleine Kreis relativ zum großen Kreis, wobei der kleine Kreis 84 so lange im großen Kreis 82 verbleibt, bis der Passerfehler größer als die Differenz der beiden Radien der beiden Kreise 82, 84 ist. Solange wie der kleine Kreis 84 vollständig im großen Kreis 82 angeordnet ist, ändert sich der Farbwert dieses Überwachungsfeldes 80 nicht. Die Radien sind derart gewählt, dass, solange wie dies der Fall ist, der Passerfehler in einem tolerierbaren Maße ist. Erst wenn der Passerfehler das tolerierbare Maß überschreitet und sich somit der Farbwert des Überwachungsfeldes 80 ändert, werden statt des Überwachungsfeldes 80 wieder Kontrollfelder 20 und Referenzfelder aufgedruckt und der Passerfehler entsprechend der zuvor beschriebenen Verfahren korrigiert.

Der Messbereich des Farbsensors 22 ist insbesondere derart gewählt, dass dieser kleiner ist als die Größe der Kontrollfelder 20 bzw. des Referenzfelder 26 bzw. des Überwachungsfeldes 80, so dass auch bei Vorliegen von Passerfehlern sichergestellt ist, dass der von dem Messbereich des Farbsensors 22 abgedeckte Bereich unabhängig von dem Passerfehler ist und somit der Fehler keinen Einfluss auf die Messung selbst hat.

Die Breite des Messbereichs ist insbesondere ein Vielfaches der Breite der Streifen bzw. Segmente der Kontrollfelder 20.

Als Passer wird jede Art der Positionierung der einzelnen Farben der Farbauszüge zueinander, auch der Farbauszüge aus der Vorder- und Rückseite des Bedruckstoffs zueinander verstanden.

Bezugszeichenliste

| | |
|---|---|
| 10 | Farbdrucker |
| 12 | Bedruckstoff |
| 14 | Transportelement |
| 16 | Druckeinheit |
| 18 | Druckbild |
| 20 | Kontrollfeld |
| 22 | Farbwertsensor |
| 24 | Steuereinheit |
| 26 | Referenzfeld |
| 30, 32, 34, 36, 38, 52, 54, 56, 70, 72 | Streifen |
| 50 | Dreieck |
| 60, 62 | Bereich |
| 64 | Mittellinie |
| 66 | Bereich |
| 80 | Überwachungsfeld |
| 82, 84 | Kreis |
| P1 | Richtung |

**Patentansprüche**

1.  Verfahren zum Steuern eines Farbdruckers oder Farbkopierers,

    bei dem zumindest ein Farbauszug einer ersten Farbe und ein Farbauszug einer zweiten Farbe zum Erzeugen eines Druckbildes (18) auf einem zu bedruckenden Bedruckstoff (12) aufgebracht werden, mit Hilfe einer Druckeinheit (16) mindestens ein Kontrollfeld (20) auf denselben Bedruckstoff (12) gedruckt wird, wobei das Kontrollfeld (20) ein vorbestimmtes Muster aufweist, das zumindest die erste Farbe und die zweite Farbe umfasst und das derart ausgebildet ist, dass sich der Farbwert des Kontrollfeldes in Abhängigkeit des Passerfehlers zwischen dem ersten und dem zweiten Farbauszug ändert, mit Hilfe eines Farbwertsensors (22) in einem Farbraum der Farbwert des Kontrollfeldes (20) integral über das gesamte Kontrollfeld (20) gemessen wird, **dadurch gekennzeichnet, dass** auf denselben Bedruckstoff (12) mindestens ein Referenzfeld (26) aufgedruckt wird, dessen Muster derart vorbestimmt ist, dass es unabhängig von dem Passerfehler den gleichen Farbwert aufweist,

der Farbwert des Referenzfeldes (26) mit Hilfe des Farbwertsensors (22) ermittelt wird,

ein Soll-Farbwert in Abhängigkeit des Farbwertes des Referenzfeldes (26) ermittelt wird,

eine Abweichung zwischen dem gemessenen Farbwert des Kontrollfeldes (20) und dem Soll-Farbwert als euklidischer Abstand im Farbraum ermittelt wird, wobei die Abweichung einer örtlichen Verschiebung der Farbauszüge entspricht, wodurch der Passerfehler ermittelt wird, und

bei dem abhängig von der ermittelten Abweichung mindestens ein Steuersignal zum Reduzieren der örtlichen Verschiebung der Farbauszüge erzeugt wird.

2. Verfahren nach Anspruch 1, **dadurch gekennzeichnet, dass** das aufgedruckte Kontrollfeld (20) ein erstes Kontrollfeld ist, dass mindestens ein weiteres Kontrollfeld (20) auf den Bedruckstoff (12) gedruckt wird, wobei bei dem weiteren Kontrollfeld (20) die mit der ersten Farbe eingefärbten Bereiche wie bei dem Muster des ersten Kontrollfeldes (20) angeordnet sind und die mit der zweiten Farbe eingefärbten Bereiche relativ zu den Bereichen der ersten Farbe um einen voreingestellten Wert in eine voreingestellte Richtung verschoben sind, dass mit Hilfe des Farbwertsensors (22) der Farbwert des weiteren Kontrollfeldes (20) ermittelt wird, dass eine Abweichung zwischen dem Soll-Farbwert und dem ermittelten Farbwert des weiteren Kontrollfeldes (20) ermittelt wird, und dass das Steuersignal in Abhängigkeit der Abweichung zwischen dem ermittelten Farbwert des ersten Kontrollfeldes (20) und dem Soll-Farbwert sowie der Abweichung zwischen dem ermittelten Farbwert des weiteren Kontrollfeldes (20) und dem Soll-Farbwert festgelegt wird.

3. Verfahren nach einem der vorhergehenden Ansprüche, **dadurch gekennzeichnet, dass** das Muster des Kontrollfeldes (20) jeweils im Wechsel einen Streifen (30) der ersten Farbe, einen Streifen (32) der zweiten Farbe und einen unbedruckten Streifen (34) aufweist.

4. Verfahren nach Anspruch 3, **dadurch gekennzeichnet, dass** das Kontrollfeld (20) ein erstes Kontrollfeld ist, dass mindestens ein zweites Kontrollfeld (20) aufgedruckt wird, dessen Muster spiegelsymmetrisch zum Muster des ersten Kontrollfeldes (20) ist, dass mit Hilfe des Farbwertsensors (22) ein Farbwert des zweiten Kontrollfeldes (20) gemessen wird, dass eine Abweichung des Farbwerts des zweiten Kontrollfeldes (20) vom dem Soll-Farbwert ermittelt wird, und dass das Steuersignal in Abhängigkeit der Abweichung des ermittelten Farbwerts des ersten Kontrollfeldes (20) und der ermittelten Abweichung des zweiten Kontrollfeldes (20) festgelegt wird.

5. Verfahren nach einem der vorhergehenden Ansprüche, **dadurch gekennzeichnet, dass** ein Farbauszug einer dritten Farbe zum Erzeugen des Druckbildes (18) auf den zu bedruckenden Bedruckstoff (12) aufgebracht wird, dass mit Hilfe der Druckeinheit (16) mindestens ein drittes Kontrollfeld (20) auf den Bedruckstoff (12) gedruckt wird, wobei das dritte Kontrollfeld (20) ein vorbestimmtes Muster aufweist, das zumindest die erste Farbe und die dritte Farbe umfasst, dass mit Hilfe des Farbwertsensors (22) mindestens ein Farbwert des dritten Kontrollfeldes (20) gemessen wird, dass eine Abweichung zwischen dem gemessenen Farbwert des dritten Kontrollfeldes (20) und einem Soll-Farbwert des dritten Kontrollfeldes (20) ermittelt wird, und dass in Abhängigkeit dieser ermittelten Abweichung des ermittelten Farbwerts des dritten Kontrollfeldes (20) von dem Soll-Farbwert des dritten Kontrollfeldes (20) mindestens ein Steuersignal einer Steuerung zur Reduktion des Passerfehlers zwischen dem Farbauszug der ersten Farbe und dem Farbauszug der dritten Farbe festlegt wird.

6. Verfahren nach einem der vorhergehenden Ansprüche, **dadurch gekennzeichnet, dass** eine Vielzahl von Kontrollfeldern (20) aufgedruckt werden, wobei bei jedem Kontrollfeld (20) die Bereiche der beiden Farben um einen anderen vorbestimmten Wert relativ zueinander verschoben sind, dass von jedem Kontrollfeld (20) der Farbwert mit Hilfe des Farbwertsensors (22) ermittelt wird und jeweils die Abweichung zum Soll-Wert berechnet wird, dass das Kontrollfeld (20) mit der geringsten Abweichung ausgewählt wird, dass der Wert, um den die Bereiche der beiden Farben bei diesem ausgewählten Kontrollfeld (20) relativ zueinander verschoben sind, mit minus eins multipliziert wird und als Wert für den tatsächlichen Passerfehler festgelegt wird, und dass die Steuergröße in Abhängigkeit des tatsächlichen Passerfehlers festgelegt wird.

7. Verfahren nach einem der vorhergehenden Ansprüche, **dadurch gekennzeichnet, dass** ein Farbauszug einer dritten Farbe zum Erzeugen des Druckbildes (18) auf einem zu bedruckenden Bedruckstoff (12) aufgebracht wird, dass das Muster des Kontrollfeldes (20) die dritte Farbe umfasst, und dass in Abhängigkeit der ermittelten Abweichung eine Steuergröße einer Steuerung zur Reduktion des Passerfehlers zwischen dem Farbauszug der ersten Farbe und dem Farbauszug der zweiten Farbe und mindestens eine Steuergröße zur Steuerung zur Reduktion des Passerfehlers zwischen dem Farbauszug der ersten Farbe und dem Farbauszug der dritten Farbe festlegt werden.

8. Verfahren nach einem der vorhergehenden Ansprüche, **dadurch gekennzeichnet, dass** der mit Hilfe des Farbwertsensors (22) gemessene Farbwert des Referenzfeldes (26) als Soll-Farbwert verwendet wird.

9. Verfahren nach einem der Ansprüche 1 bis 7, **dadurch gekennzeichnet, dass** der Soll-Farbwert auf Basis des mit Hilfe des Farbwertsensors (22) gemessenen Farbwerts des Referenzfeldes (26) errechnet wird.

**Claims**

1. A method for controlling a color printer or color copier, in which at least a color separation of a first color and a color separation of a second color are applied to a printing substrate (12) to be printed in order to generate a print image (18),

   with the aid of a printing unit (16) at least one control field (20) is printed on the same printing substrate (12), wherein the control field (20) has a predetermined pattern that includes at least the first color and the second color and that is designed such that the color value of the control field changes depending on the registration error between the first and the second color separation,
   with the aid of a color value sensor (22) the color value of the control field (20) is integrally measured over the entire control field (20) in a color space, **characterized in that** on the same printing substrate (12) at least one reference field (26) is printed, the pattern of which is predetermined such that it presents the same color value independent of the registration error,
   the color value of the reference field (26) is determined with the aid of the color value sensor (22),
   a desired color value is determined depending on the color value of the reference field (26),
   a deviation between the measured color value of the control field (20) and the desired color value is determined as the Euclidean distance in the color space, the deviation corresponding to a spatial shift of the color separations, as a result whereof the registration error is determined, and
   in which depending on the determined deviation at least a control signal for reducing the spatial shift of the color separations is generated.

2. The method according to claim 1, **characterized in that** the printed control field (20) is a first control field, that at least a further control field (20) is printed on the printing substrate (12), wherein in the further control field (20) the regions inked with the first color are arranged in the pattern of the first control field (20) and the regions inked with the second color are shifted relative to the regions of the first color by a preset value in a preset direction, that with the aid of the color value sensor (22) the color value of the further control field (20) is determined, that a deviation between the desired color value and the determined color value of the further control field (20) is determined, and that the control signal is established depending on the deviation between the determined color value of the first control field (20) and the desired color value as well as the deviation between the determined color value of the further control field (20) and the desired color value.

3. The method according to one of the preceding claims, **characterized in that** the pattern of the control field (20) respectively has in alternating fashion a stripe (30) of the first color, a stripe (32) of the second color, and an unprinted stripe (34).

4. The method according to claim 3, **characterized in that** the control field (20) is a first control field , that at least a second control field (20) is printed, the pattern of which is mirror-symmetrical relative to the pattern of the first control field (20), that with the aid of the color value sensor (22) a color value of the second control field (20) is measured, that a deviation of the color value of the second control field (20) from the desired color value is determined, and that the control signal is established depending on the deviation of the determined color value of the first control field (20) and the determined deviation of the second control field (20) .

5. The method according to one of the preceding claims, **characterized in that** a color separation of a third color is applied to the printing substrate (12) to be printed in order to generate the print image (18), that with the aid of the printing unit (16) at least a third control field (20) is printed on the printing substrate (12), wherein the third control field (20) has a predetermined pattern including at least the first color and the third color, that with the aid of the color value sensor (22) at least a color value of the third control field (20) is measured, that a deviation between the measured color value of the third control field (20) and a desired color value of the third control field (20) is determined, and that depending on this determined deviation of the determined color value of the third control field (20) from the desired color value of the third control field (20) at least a control signal of a control for reducing the registration error between the color separation of the first color and the color separation of the third color is established.

6. The method according to one of the preceding claims, **characterized in that** a plurality of control fields (20) are printed, wherein in each control field (20) the regions of the two colors are shifted relative to one another by a different predetermined value, that the color value of each control field (20) is determined with the aid of the color value sensor (22) and the deviation from the desired value is respectively calculated, that the control field (20) with the smallest deviation is selected, that the value by which the regions of the two colors are shifted relative to one another in this selected control field (20) is multiplied by negative one and is established as a value for the actual registration error, and that the control variable is established depending on the actual registration error.

7. The method according to one of the preceding claims, **characterized in that** a color separation of a third color is applied to a printing substrate (12) to be printed in order to generate the print image (18), that the pattern of the control field (20) comprises the third color, and that depending on the determined deviation a control variable of a control for reducing the registration error between the color separation of the first color and the color separation of the second color and at least a control variable of a control for reducing the registration error between the color separation of the first color and the color separation of the third color are established.

8. The method according to one of the preceding claims, **characterized in that** the color value of the reference field (26) that is measured with the aid of the color value sensor (22) is used as said desired color value.

9. The method according to one of the claims 1 to 7, **characterized in that** the desired color value is calculated on the basis of the color value of the reference field (26) that is measured with the aid of the color value sensor (22).

**Revendications**

1. Procédé pour commander une imprimante couleur ou un photocopieur couleur,

   selon lequel au moins une sélection de couleur d'une première couleur et une sélection de couleur d'une deuxième couleur sont appliquées sur un support d'impression (12) à imprimer pour produire une image imprimée (18),
   au moins un champ de contrôle (20) est imprimé sur le même support d'impression (12) à l'aide d'une unité d'impression (16), dans lequel le champ de contrôle (20) présente un motif prédéfini, qui comprend au moins la première couleur et la deuxième couleur et qui est réalisé de telle sorte que la valeur de couleur du champ de contrôle varie en fonction de l'erreur de repérage entre la première et la deuxième sélection de couleur,
   la valeur de couleur du champ de contrôle (20) est mesurée intégralement sur l'ensemble du champ de contrôle (20) à l'aide d'un capteur de valeur de couleur (22) dans un espace de couleur,
   **caractérisé en ce que**
   au moins un champ de référence (26), dont le motif est prédéfini de telle sorte qu'il présente la même valeur de couleur indépendamment de l'erreur de repérage, est imprimé sur le même support d'impression (12),
   la valeur de couleur du champ de référence (26) est déterminée à l'aide du capteur de valeur de couleur (22),
   une valeur de couleur théorique est déterminée en fonction de la valeur de couleur du champ de référence (26),
   un écart entre la valeur de couleur mesurée du champ de contrôle (20) et la valeur de couleur théorique est déterminé en tant que distance euclidienne dans l'espace de couleur, dans lequel l'écart correspond à un déplacement local des sélections de couleur,
   ce qui a pour effet que l'erreur de repérage est déterminée, et
   selon lequel au moins un signal de commande pour réduire le déplacement local des sélections de couleur est produit en fonction de l'écart déterminé.

2. Procédé selon la revendication 1,
   **caractérisé en ce que** le champ de contrôle (20) imprimé est un premier champ de contrôle, qu'au moins un autre champ de contrôle (20) est imprimé sur le support d'impression (12), dans lequel pour l'autre champ de contrôle (20) les zones encrées avec la première couleur sont disposées comme pour le motif du premier champ de contrôle (20) et les zones encrées avec la deuxième couleur sont déplacées par rapport aux zones de la première couleur selon une valeur préréglée dans une direction préréglée, que la valeur de couleur de l'autre champ de contrôle (20) est déterminée à l'aide du capteur de valeur de couleur (22), qu'un écart entre la valeur de couleur théorique et la valeur de couleur déterminée de l'autre champ de contrôle (20) est déterminé, et que le signal de commande est défini en fonction de l'écart entre la valeur de couleur déterminée du premier champ de contrôle (20) et la valeur de couleur théorique ainsi que de l'écart entre la valeur de couleur déterminée de l'autre champ de contrôle (20) et la valeur de couleur théorique.

3.  Procédé selon l'une quelconque des revendications précédentes, **caractérisé en ce que** le motif du champ de contrôle (20) présente respectivement en alternance une bande (30) de la première couleur, une bande (32) de la deuxième couleur et une bande (34) non imprimée.

4.  Procédé selon la revendication 3, **caractérisé en ce que** le champ de contrôle (20) est un premier champ de contrôle, qu'au moins un deuxième champ de contrôle (20) est imprimé, dont le motif est en symétrie spéculaire par rapport au motif du premier champ de contrôle (20), qu'une valeur de couleur du deuxième champ de contrôle (20) est mesurée à l'aide du capteur de valeur de couleur (22), qu'un écart de la valeur de couleur du deuxième champ de contrôle (20) par rapport à la valeur de couleur théorique est déterminé, et que le signal de commande est défini en fonction de l'écart de la valeur de couleur déterminée du premier champ de contrôle (20) et de l'écart déterminé du deuxième champ de contrôle (20).

5.  Procédé selon l'une quelconque des revendications précédentes, **caractérisé en ce qu'**une sélection de couleur d'une troisième couleur pour produire l'image imprimée (18) est appliquée sur le support d'impression (12) à imprimer, qu'au moins un troisième champ de contrôle (20) est imprimé sur le support d'impression (12) à l'aide de l'unité d'impression (16), dans lequel le troisième champ de contrôle (20) présente un motif prédéfini, qui comprend au moins la première couleur et la troisième couleur, qu'au moins une valeur de couleur du troisième champ de contrôle (20) est mesurée à l'aide du capteur de valeur de couleur (22), qu'un écart entre la valeur de couleur mesurée du troisième champ de contrôle (20) et une valeur de couleur théorique du troisième champ de contrôle (20) est déterminé, et qu'en fonction de cet écart déterminé de la valeur de couleur déterminée du troisième champ de contrôle (20) par rapport à la valeur de couleur théorique du troisième champ de contrôle (20), au moins un signal de commande d'une commande pour réduire l'erreur de repérage entre la sélection de couleur de la première couleur et la sélection de couleur de la troisième couleur est défini.

6.  Procédé selon l'une quelconque des revendications précédentes, **caractérisé en ce qu'**une pluralité de champs de contrôle (20) sont imprimés, dans lequel pour chaque champ de contrôle (20) les zones des deux couleurs sont déplacées l'une par rapport à l'autre selon une autre valeur prédéfinie, que la valeur de couleur de chaque champ de contrôle (20) est déterminée à l'aide du capteur de valeur de couleur (22) et respectivement l'écart par rapport à la valeur théorique est calculé, que le champ de contrôle (20) avec l'écart le plus petit est sélectionné, que la valeur de laquelle les zones des deux couleurs sont déplacées l'une par rapport à l'autre pour ce champ de contrôle (20) sélectionné est multipliée par moins un et est définie en tant que valeur pour l'erreur de repérage effective, et que la grandeur de commande est définie en fonction de l'erreur de repérage effective.

7.  Procédé selon l'une quelconque des revendications précédentes, **caractérisé en ce qu'**une sélection de couleur d'une troisième couleur pour produire l'image imprimée (18) est appliquée sur un support d'impression (12) à imprimer, que le motif du champ de contrôle (20) comprend la troisième couleur, et qu'en fonction de l'écart déterminé, une grandeur de commande d'une commande pour la réduction de l'erreur de repérage entre la sélection de couleur de la première couleur et la sélection de couleur de la deuxième couleur et au moins une grandeur de commande pour la commande pour la réduction de l'erreur de repérage entre la sélection de couleur de la première couleur et la sélection de couleur de la troisième couleur sont définies.

8.  Procédé selon l'une quelconque des revendications précédentes, **caractérisé en ce que** la valeur de couleur du champ de référence (26) mesurée à l'aide du capteur de valeur de couleur (22) est utilisée comme valeur de couleur théorique.

9.  Procédé selon l'une quelconque des revendications 1 à 7, **caractérisé en ce que** la valeur de couleur théorique est calculée sur la base de la valeur de couleur du champ de référence (26) mesurée à l'aide du capteur de valeur de couleur (22).

10

16    24    22

14

P1

12

**FIG. 1**

P1    18    12

26    20

**FIG. 2**

ΔE gem./soll

-20μm  -10μm  0  10μm  20μm  Zielort

**FIG. 3**

ΔE gem./soll

-2  -1  0  1  2  Kontrollfeld

**FIG. 4**

FIG. 5

**FIG. 6**

EP 2 855 154 B1

**FIG. 7**

a)

30

32

b)

c)

d)

**FIG. 8**

a)

b)

**FIG. 9**

a)

b)

**FIG.10**

**FIG. 11**

**FIG. 12**

**FIG. 13**

**FIG. 14**

EP 2 855 154 B1

FIG. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009035006 A1
- DE 10244437 B4
- US 7396099 B2
- DE 10131957 A1
- DE 102010036249 A1
- US 20100007690 A1
- US 7184700 B2
- DE 3248795 C2
- EP 1593508 A2
- DE 19738992 A1
- DE 19639014 C2
- DE 4335350 A1
- EP 0083068 A1
- US 20030210412 A1
- DE 19701967 C2